# EUROPEAN PATENT APPLICATION

(11) **EP 4 681 945 A1**
(43) Date of publication of application: **21.01.2026**
(21) Application number: 24189811.3
(22) Date of filing: 19.07.2024
(51) Int. Cl.: B60G 9/00, B60P 1/04

(54) **A CONTROL UNIT AND A METHOD FOR PREVENTING ROLLOVER OF A TIPPER TRUCK**

(71) Applicant: Volvo Truck Corporation, 405 08 Göteborg (SE)
(72) Inventor: ANGADI, Sunil, 580004 Dharwad (IN); PATIL, Hemangi, 416416 Sangli (IN); SRAVANI, Goteti, 534275 Narsapuram (IN); JEYAKAR M R, Amarnath, 627859 Surandai (IN); ATHREYA. S, Vishnu, 560078 Bengaluru (IN)
(74) Representative: Zacco Sweden AB

(57) **Abstract**

A control unit (130) for preventing rollover of a tipper truck (100) on inclined surfaces (210), wherein the control unit is configured to: receive sensor data from one or more vehicle sensors (120), wherein the sensor data comprises a lateral inclination angle (Θ_{y}), establish compliance or non-compliance with a safety protocol, wherein compliance with the safety protocol is established if the lateral inclination angle (Θ_{y}) does not exceed a predefined lateral inclination angle threshold (Θmax), which represents a maximum allowable lateral inclination angle, abort tipping operation in response to non-compliance with the safety protocol, and adjust suspension systems (220L, 220R) of the truck (100) in response to compliance with the safety protocol, such that a suspension adjustment angle (ϕ_{y}) counteracts the lateral inclination angle (Θ_{y}), and proceed with the tipping operation once the suspension adjustment angle (ϕ_{y}) has fully compensated for the lateral inclination angle (Θ_{y}).

## Description

### TECHNICAL FIELD

The disclosure relates generally to tipper trucks. In particular aspects, the disclosure relates to a control unit and a method for preventing rollover of a tipper truck on inclined surfaces. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Tipper trucks, including those with tractor-trailer configurations, are extensively used in industries like construction and mining to transport and unload bulk materials. The unloading process requires elevating the tipper body to release the load. However, this action can lead to stability issues, especially when the truck is positioned on uneven or sloped surfaces. The elevation of the tipper body shifts the center of gravity upwards, significantly increasing the risk of rollover accidents. An articulated tipper configuration may complicate this further as detection of sloped surfaces becomes more challenging. In such cases, misalignment between the tractor and trailer could also lead to a rollover of the tipper body onto the tractor's cab, posing a considerable risk to operator safety.

The current state of technology in the tipper truck industry does not adequately address the challenges posed by tipping on uneven surfaces, particularly for tractor-trailer configurations. Existing solutions are generally limited to manual checks and adjustments that do not effectively mitigate the risk of rollover accidents. Hence, there is a need for an improved tipper truck design that incorporates control and safety mechanisms to avoid rollover accidents.

### SUMMARY

According to a first aspect of the disclosure, a control unit for preventing rollover of a tipper truck on inclined surfaces is disclosed. The control unit is configured to receive sensor data from one or more vehicle sensors, wherein the sensor data comprises a lateral inclination angle θ_{y}. The control unit is also configured to establish compliance or non-compliance with a safety protocol, wherein compliance with the safety protocol is established if the lateral inclination angle θ_{y} does not exceed a predefined lateral inclination angle threshold θₘₐₓ, which represents a maximum allowable lateral inclination angle. In response to non-compliance with the safety protocol, the control unit is configured to abort tipping operation. In response to compliance with the safety protocol, the control unit is configured to adjust suspension systems, such that a suspension adjustment angle φ_{y} counteracts the lateral inclination angle θ_{y}. Finally, the control unit is configured to proceed with tipping operation once the suspension adjustment angle φ_{y} has fully compensated for the lateral inclination angle θ_{y}. The first aspect of the disclosure may seek to address the challenges posed by tipping on uneven surfaces. A technical benefit may include improved stability that reduces risk of rollover accidents.

Optionally in some examples, including in at least one preferred example, establishing compliance with the safety protocol includes determining a maximum allowable tipper body angle that will ensure that the center of gravity of the tipper truck does not exceed stability boundaries for rollover stability during operation. A technical benefit may include the ability to utilize a lower tipping angle on inclined surfaces where the maximum tipping angle is not allowable, thereby maintaining safety standards and reducing the risk of rollover accidents.

Optionally in some examples, including in at least one preferred example, aborting tipping operation comprises disengaging power take-off, such that a hydraulic system for operating the tipper body is deactivated. Aborting tipping operation may further comprise activating a safety mechanism that prevents the operator from performing a manual override A technical benefit may include increased safety by disengaging PTO and disabling manual overrides.

Optionally in some examples, including in at least one preferred example, the tipper truck is a tractor-trailer combination and the received sensor data further comprises an articulation angle δ between tractor and trailer, and wherein compliance with the safety protocol further requires that the articulation angle δ is below a predefined articulation angle threshold δₘₐₓ which represents a maximum permissible articulation angle. A technical benefit may include enhanced detection of inclined surfaces and preventing rollover accidents where the tipper body could fall onto the tractor's cab.

Optionally in some examples, including in at least one preferred example, the received sensor data further comprises lateral motion and wherein compliance with the safety protocol further requires that the lateral motion does not exceed a predefined lateral motion threshold which represents a maximum allowable lateral motion. A technical benefit may include that unstable surfaces not suitable for tipping may be detected by unexpected lateral motion.

Optionally in some examples, including in at least one preferred example, wherein the received sensor data further comprises wheel slips, and wherein compliance with the safety protocol further requires that the wheel slips do not exceed a predefined wheel slip threshold which represents maximum allowable wheel slip. A technical benefit may include that unstable surfaces not suitable for tipping may be detected by unexpected wheel slips.

Optionally in some examples, including in at least one preferred example, the received sensor data further comprises longitudinal inclination angle θₓ, and wherein the control unit is configured to determine an orientation of the tipper truck based on the lateral inclination angle θ_{y} and the longitudinal inclination angle θₓ, such that the lateral inclination angle θ_{y} does not exceed a predefined lateral inclination angle threshold θₘₐₓ. A technical benefit may include that an orientation that complies with the safety protocol may be found.

According to a second aspect of the disclosure a tipper truck is disclosed. The tipper truck comprises vehicle sensors for obtaining sensor data, wherein the vehicle sensors comprise a tilt sensor and suspension adjustment sensor, and a control unit according to any of the previously mentioned examples. The second aspect of the disclosure may seek to address the challenges posed by tipping on uneven surfaces. A technical benefit may include improved stability that reduces risk of rollover accidents.

Optionally in some examples, including in at least one preferred example, the tipper truck is a tractor-trailer combination, and the vehicle sensors further comprise an articulation angle sensor. A technical benefit may include enhanced detection of inclined surfaces and preventing rollover accidents where the tipper body could fall onto the tractor's cab.

Optionally in some examples, including in at least one preferred example, the vehicle sensors further comprise wheel slip sensors for obtaining wheel slip data, a camera or an inertial measurement unit for obtaining lateral motion data, and a second tilt sensor for obtaining longitudinal inclination angle. A technical benefit may include that unstable surfaces not suitable for tipping may be detected and that an orientation that complies with the safety protocol may be determined.

According to a third aspect of the disclosure, a method for preventing rollover of a tipper truck on inclined surfaces is disclosed. The method comprises receiving sensor data from one or more vehicle sensors, wherein the sensor data comprises a lateral inclination angle θ_{y}. The method also comprises establishing compliance or non-compliance with a safety protocol, wherein compliance with the safety protocol is established if the lateral inclination angle θ_{y} does not exceed a predefined lateral inclination angle threshold θₘₐₓ, which represents a maximum allowable lateral inclination angle. In response to non-compliance with the safety protocol, the method comprises aborting tipping operation. In response to compliance with the safety protocol, the method comprises adjusting the suspension system, such that a suspension adjustment angle φ_{y} counteracts the lateral inclination angle θ_{y}. Finally, the method comprises proceeding with tipping operation once the suspension adjustment angle φ_{y} has fully compensated for the lateral inclination angle θ_{y}. The third aspect of the disclosure may seek to address the challenges posed by tipping on uneven surfaces. A technical benefit may include improved stability that reduces risk of rollover accidents.

Optionally in some examples, including in at least one preferred example, establishing compliance with the safety protocol further comprises determining a maximum allowable tipper body angle that will ensure that the center of gravity of the tipper truck does not exceed stability boundaries for rollover stability during operation. A technical benefit may include the ability to utilize a lower tipping angle on inclined surfaces where the maximum tipping angle is not allowable, thereby maintaining safety standards and reducing the risk of rollover accidents.

Optionally in some examples, including in at least one preferred example, aborting tipping operation comprises disengaging power take-off, such that a hydraulic system for operating the tipper body is deactivated. Aborting tipping operation may further comprise activating a safety mechanism that prevents the operator from performing a manual override A technical benefit may include increased safety by disengaging PTO and disabling manual overrides.

Optionally in some examples, including in at least one preferred example, the tipper truck is a tractor-trailer combination and the received sensor data further comprises an articulation angle δ between tractor and trailer, and wherein compliance with the safety protocol further requires that the articulation angle δ is below a predefined articulation angle threshold δₘₐₓ which represents a maximum permissible articulation angle. A technical benefit may include enhanced detection of inclined surfaces and preventing rollover accidents where the tipper body could fall onto the tractor's cab.

Optionally in some examples, including in at least one preferred example, the received sensor data further comprises lateral motion and wherein compliance with the safety protocol further requires that the lateral motion does not exceed a predefined lateral motion threshold which represents a maximum allowable lateral motion. A technical benefit may include that unstable surfaces not suitable for tipping may be detected by unexpected lateral motion. Optionally in some examples, including in at least one preferred example, wherein the received sensor data further comprises wheel slips, and wherein compliance with the safety protocol further requires that the wheel slips do not exceed a predefined wheel slip threshold which represents maximum allowable wheel slip. A technical benefit may include that unstable surfaces not suitable for tipping may be detected by unexpected wheel slips.

Optionally in some examples, including in at least one preferred example, the received sensor data further comprises a longitudinal inclination angle θₓ, and the method further comprises determining an orientation of the tipper truck based on the lateral inclination angle θ_{y} and the longitudinal inclination angle θₓ, such that the lateral inclination angle θ_{y} does not exceed a predefined lateral inclination angle threshold θₘₐₓ. A technical benefit may include that an orientation that complies with the safety protocol may be found.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram showing a top view of a tipper truck in an articulated tractor-trailer configuration, according to an example.
FIG. 2A is a schematic diagram showing a rear view of a tipper truck with a default suspension adjustment angle of 0 degrees, according to an example.
FIG. 2B is a schematic diagram showing a rear view of a tipper truck with a suspension adjustment angle that compensates for a lateral inclination angle of the ground surface relative to a horizontal ground plane, according to an example.
FIG. 3 is a schematic diagram showing a side view of a tipper truck in an articulated tractor-trailer configuration, according to an example
FIG. 4 is a flow chart of a method for preventing rollover of a tipper truck.
FIG. 5A schematically illustrates a control unit.
FIG. 5B shows an example of a computer program product.
FIG. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

To clearly distinguish between the operational aspect of tipping (e.g., unloading process) and accidental tipping (i.e., vehicle rollover), the term tipping will refer to the unloading process throughout this document. For example, tipping angle refers to the angle between the chassis and the tipper body during the unloading process, and tipping operation refers to the deliberate process of tipping to unload materials. Accidental tipping caused by unintended vehicle instability will be referred to as rollover or overturning.

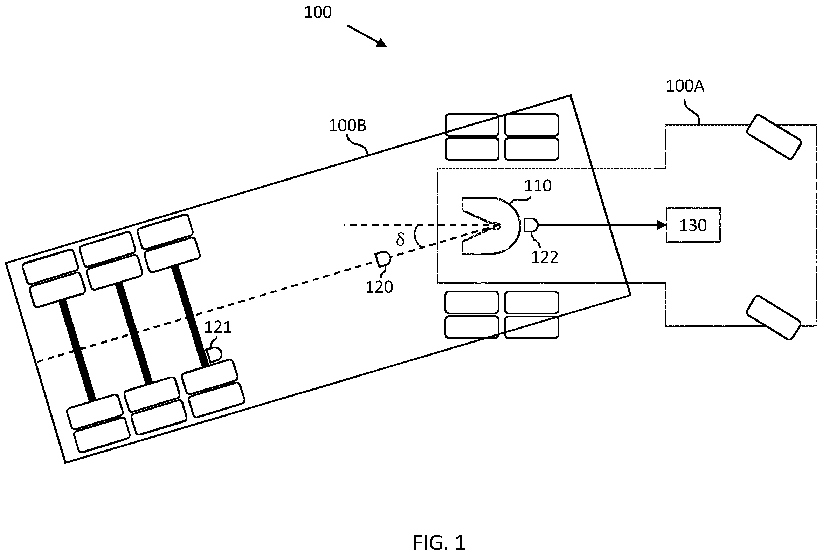

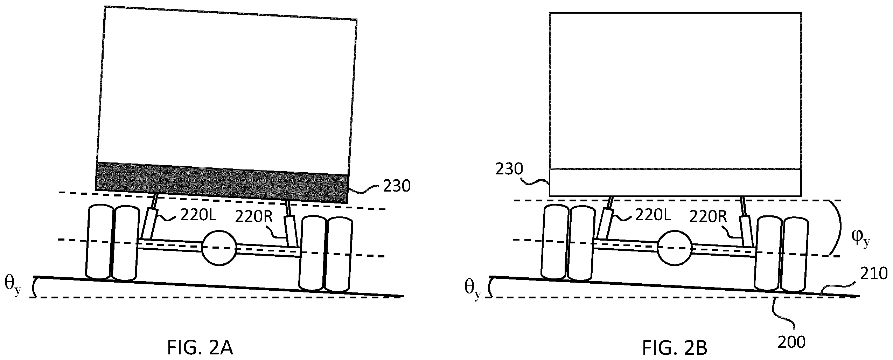

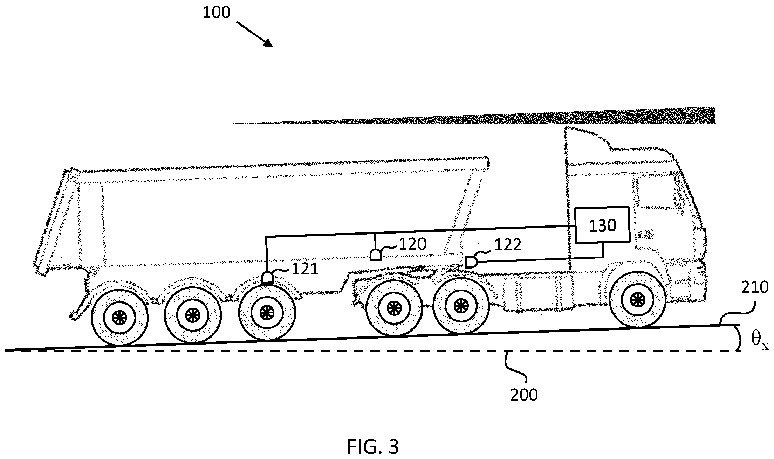

Figs. 1-3 illustrate a first aspect of the disclosure relating to a control unit 130 for preventing rollover of a tipper truck 100 on an inclined surface 210. Fig. 1 provides a top view, Fig. 2A and 2B rear views, and Fig. 3 a side view of the tipper truck 100.

The tipper truck 100 comprises one or more vehicle sensors 120, 121, 122 and a control unit 130. The vehicle sensors comprise a tilt sensor 120 configured to measure a lateral inclination angle θ_{y} of the ground surface 210 to a horizontal ground plane 200. The tilt sensor 120 can be any device or circuit that measures the angular position relative to gravity, e.g., a tilt sensor or an inclinometer. The vehicle sensors also comprise a suspension adjustment sensor 121 configured to measure an angle between a rear axle of the tipper truck and the chassis 230 of the tipper truck. The suspension angle sensor 121 may be an arm lever sensor, or any type of sensor that provides a measure indicative of axle-chassis angle.

The control unit is configured to receive sensor data from the one or more vehicle sensors, wherein the sensor data comprises the lateral inclination angle θ_{y}, and may also comprise a suspension adjustment angle φ_{y}. The lateral inclination angle is used to establish compliance or non-compliance with a safety protocol, wherein compliance with the safety protocol is established if the lateral inclination angle θ_{y} does not exceed a predefined lateral inclination angle threshold θₘₐₓ. This threshold represents a maximum allowable lateral inclination angle and will typically be an angle that ensures that the center of gravity (CoG) of the tipper truck remains within certain stability boundaries when the tipper body is being elevated. The stability boundaries may have been determined through simulations, empirical data, or by using established stability models for tipper trucks that takes into account factors like load distribution, chassis design, and hydraulic dynamics. Alternatively, the predefined lateral inclination angle threshold θₘₐₓ may be determined directly through simulations or empirical data. It should be noted that the predefined lateral inclination angle threshold θₘₐₓ serves as a threshold for both positive and negative angles. In other words, not exceeding the threshold refers to the absolute value of lateral inclination angle |θ_{y}| not exceeding the predefined lateral inclination angle threshold θₘₐₓ.

Additionally, the control unit may when establishing compliance with the safety protocol also be configured to determine a maximum allowable tipping angle that will ensure that the CoG of the tipper truck does not exceed the stability boundaries for rollover stability during operation. Thus, different lateral inclination angles can be associated with different maximum allowable tipping angles. An advantage of this approach is that on an inclined surface where the maximum tipping angle is not allowable, a lower tipping angle can still be used, thereby maintaining safety standards and reducing the risk of rollover accidents.

The tipper truck 100 can be a rigid tipper truck or an articulated tractor-trailer configuration, where the trailer 100B is connected to the tractor 100A via a fifth-wheel coupling 110. In the case of a tractor-trailer configuration, the trailer 100B will typically connect to the tractor 100A via a fifth-wheel coupling 110. The tipper truck 100 may also comprise an articulation angle sensor 122 configured to measure an articulation angle δ between the tractor unit 100A and the trailer unit 100B. Hence, the sensor data may further comprise the articulation angle δ and compliance with the safety protocol may further require that the articulation angle δ is below a predefined articulation angle threshold δₘₐₓ. This threshold may be set by regulatory standards or determined through simulations and empirical data to identify unsafe articulation angles, such as those that could cause the tipper body to fall on the tractor cab in the event of a rollover accident. In some examples, predefined articulation angle threshold may require that the tractor 100A and the trailer 100B are fully aligned. It should be noted that the predefined articulation angle threshold δₘₐₓ serves as a threshold for both positive and negative angles. In other words, not exceeding the threshold refers to the absolute value of articulation angle |δ_{y}| not exceeding the predefined lateral inclination angle threshold δₘₐₓ.

The received sensor data may further comprise lateral motion v, a_{y}, r, and compliance with the safety protocol may further require that the lateral motion v, a_{y}, r does not exceed a predefined lateral motion threshold vₘₐₓ, a_{y,max}, rₘₐₓ which represents a maximum allowable lateral motion. The lateral motion may be any of lateral speed v, lateral acceleration a_{y}, and yaw rate r. The predefined lateral motion threshold vₘₐₓ, a_{y,max}, rₘₐₓ may have been determined through simulations or empirical data to detect unstable surfaces not suitable for tipping. Exceeding the predefined lateral motion threshold could therefore indicate an unstable surface, signaling potential risk for tipping operations.

The received sensor data may further comprise wheel slips, and compliance with the safety protocol may further require that the wheel slips do not exceed a predefined wheel slip threshold which represents maximum allowable wheel slip. The predefined wheel slip threshold may have been determined through simulations or empirical data to detect unstable surfaces not suitable for tipping. Exceeding this threshold could therefore indicate an unstable surface, signaling potential risk for tipping operations.

In response to non-compliance with safety protocol, the control unit is configured to abort tipping operation. Aborting tipping operation would normally include disengagement of power take-off (PTO), such that a hydraulic system for operating the tipper body is deactivated. It may also include a safety mechanism that prevents the operator from performing a manual override.

In response to compliance with the safety protocol, the control unit is configured to adjust left side and right side suspension systems 220L, 220R, such that the suspension adjustment angle φ_{y} counteracts the lateral inclination angle θ_{y}. A default suspension adjustment angle φ_{y} is typically 0 degrees. To achieve the adjustment, a compressor may alter the air pressure within left side and right side suspension systems 220L, 220R, thereby dynamically adjusting the vehicle's height and tilt. This action can be performed on one or more axles with adjustable suspension systems 220L, 220R. The tipping operation may proceed once suspension adjustment angle φ_{y} has adequately compensated for the lateral inclination angle θ_{y}.

The received sensor data may further comprise a longitudinal inclination angle θₓ wherein the control unit 130 may be configured to propose a rotation of the tipper truck position based on the lateral inclination angle θ_{y} and the longitudinal inclination angle θₓ such that the lateral inclination angle θ_{y} will not exceed the predefined lateral inclination angle threshold θₘₐₓ. This involves determining a ground surface plane based on the lateral inclination angle θ_{y} and the longitudinal inclination angle θ_{y}. From this plane rotations of the tipper truck that would not exceed threshold θₘₐₓ can be determined and proposed on a display to the operator.

Figs. 1-3 also illustrate a second aspect of the disclosure relating to a tipper truck 100 for preventing accidental rollover on an inclined surface 210. The tipper truck comprises vehicle sensors for obtaining sensor data, wherein the vehicle sensors comprise a tilt sensor 120, a suspension adjustment sensor 121, and a control unit 130.

In the case that the tipper truck 100 is a tractor-trailer combination, the vehicle sensors may further comprise an articulation angle sensor 122. The vehicle sensors may further wheel slip sensors for obtaining wheel slip data, a camera or an inertial measurement unit (IMU) for obtaining lateral motion data, and a second tilt sensor longitudinal inclination angle θₓ. The control unit 130 is a control unit according to any of the examples of the first aspect of the disclosure and wherein compliance with the safety protocol a based on the available sensor data.

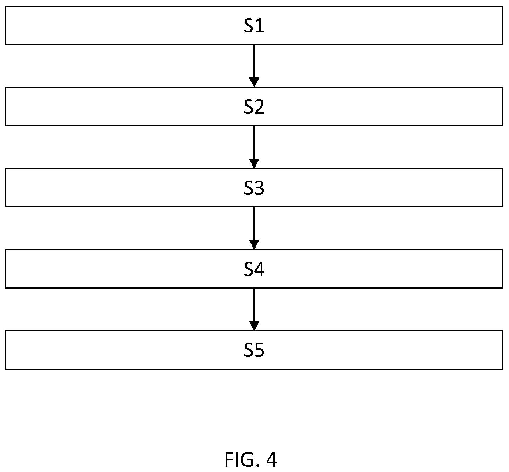

Fig. 4 illustrates a third aspect of the disclosure relating to a method of a tipper truck 100 for preventing rollover an inclined surface 210. The method comprises the steps of receiving S 1 sensor data, establishing S2 compliance or non-compliance with a safety protocol, aborting S3 tipping operation in response to non-compliance with the safety protocol, adjusting S4 left side and right side suspensions 220L, 220R, and proceeding S5 in response to compliance. It should be noted that any of the aforementioned aspects relating to the control unit 130 and the tipper truck 100 are also applicable to the method.

The step of receiving S1 comprises receiving sensor data from one or more vehicle sensors, wherein the sensor data comprises a lateral inclination angle θ_{y}, and may also comprise a suspension adjustment angle φ_{y}.

The step of establishing S2 comprises establishing compliance or non-compliance with a safety protocol, wherein compliance of the safety protocol is established if the lateral inclination angle θ_{y} does not exceed a predefined lateral inclination angle threshold θₘₐₓ. This threshold represents a maximum allowable lateral inclination angle and will typically be an angle that ensures that the center of gravity (CoG) of the tipper truck remains within certain stability boundaries when the tipper body is being elevated. The stability boundaries may have been determined through simulations, empirical data, or by using established stability models for tipper trucks that takes into account factors like load distribution, chassis design, and hydraulic dynamics. Alternatively, the predefined lateral inclination angle threshold θₘₐₓ may be determined directly through simulations or empirical data. It should be noted that the predefined lateral inclination angle threshold θₘₐₓ serves as a threshold for both positive and negative angles. In other words, not exceeding the threshold refers to the absolute value of lateral inclination angle |θ_{y}| not exceeding the predefined lateral inclination angle threshold θₘₐₓ.

Additionally, establishing S2 compliance with the safety protocol may further comprises determining a maximum allowable tipper body angle that will ensure that the center of gravity (CoG) of the tipper truck does not exceed a CoG threshold for rollover stability during operation. Thus, different lateral inclination angles can be associated with different maximum allowable tipping angles. An advantage of this approach is that on an inclined surface where the maximum tipping angle is not allowable, a lower tipping angle can still be used, thereby maintaining safety standards and reducing the risk of rollover accidents.

The tipper truck 100 can be a rigid tipper truck or an articulated tractor-trailer configuration 100A, 100B. In case of a tractor-trailer configuration 100A, 100B the tipper truck 100 would typically also comprise an articulation angle sensor 122 configured to measure an articulation angle δ between the tractor unit 100A and the tipper trailer unit 100B. Hence, the sensor data may further comprise the articulation angle δ and establishing S2 compliance with the safety protocol may further require that an articulation angle δ is below a predefined articulation angle threshold δₘₐₓ which represents a maximum permissible articulation angle. This threshold will typically denote a maximum permissible articulation angle that ensures that tractor and trailer are safely aligned during a tipping operation. This threshold may be set by regulatory standards or determined through simulations and empirical data to identify unsafe articulation angles, such as those that could cause the tipper body to fall on the tractor cab in the event of a rollover accident. In some examples, predefined articulation angle threshold may require that the tractor 100A and the trailer 100B are fully aligned. It should be noted that the predefined articulation angle threshold δₘₐₓ serves as a threshold for both positive and negative angles. In other words, not exceeding the threshold refers to the absolute value of articulation angle |δ_{y}| not exceeding the predefined lateral inclination angle threshold δₘₐₓ.

The received sensor data may further comprise lateral motion v, a_{y}, r, and establishing S2 compliance with the safety protocol may further require that the lateral motion v, a_{y}, r does not exceed a predefined lateral motion threshold vₘₐₓ, a_{y,max}, rₘₐₓ which represents a maximum allowable lateral motion. The lateral motion may be any of lateral speed v, lateral acceleration a_{y}, and yaw rate r. The predefined lateral motion threshold vₘₐₓ, a_{y,max}, rₘₐₓ may have been determined through simulations or empirical data to detect unstable surfaces not suitable for tipping. Exceeding the predefined lateral motion threshold could therefore indicate an unstable surface, signaling potential risk for tipping operations.

The received sensor data may further comprise wheel slips, and establishing S2 compliance with the safety protocol may further require that the wheel slips do not exceed a predefined wheel slip threshold which represents maximum allowable wheel slip. The predefined wheel slip threshold may have been determined through simulations or empirical data to detect unstable surfaces not suitable for tipping. Exceeding this threshold could therefore indicate an unstable surface, signaling potential risk for tipping operations.

The step of aborting S3 tipping operation is performed in response to non-compliance with the safety protocol. In one example, aborting S3 may further comprise disengaging power take-off, such that a hydraulic system for operating the tipper body is deactivated. Additionally, aborting S3 may include activating a safety mechanism that prevents the operator from performing a manual override.

The step of adjusting S4 left side and right side suspensions 220L, 220R is performed in response to compliance with the safety protocol, such that the suspension adjustment angle φ_{y} counteracts the lateral inclination angle θ_{y}. A default suspension adjustment angle φ_{y} is typically 0 degrees. To achieve the adjustment, a compressor may alter the air pressure within left side and/or right side suspension systems 220L, 220R, dynamically adjusting the vehicle's height and tilt. This action can be performed on one or more axles with adjustable suspension systems 220L, 220R.

The step of proceeding S5 comprises proceeding with tipping operation once the suspension adjustment angle φ_{y} has fully compensated for the lateral inclination angle θ_{y}.

The received sensor data may further comprise a longitudinal inclination angle θₓ and wherein the method comprising determining a rotation of the tipper truck position based on the lateral inclination angle θ_{y} and the longitudinal inclination angle θₓ such that the lateral inclination angle θ_{y} will not exceed the predefined lateral inclination angle threshold θₘₐₓ. This involves determining a ground surface plane based on the lateral inclination angle θ_{y} and the longitudinal inclination angle θ_{y}. From this plane rotations of the tipper truck that do not exceed the threshold θₘₐₓ can be determined and be proposed on a display to the operator.

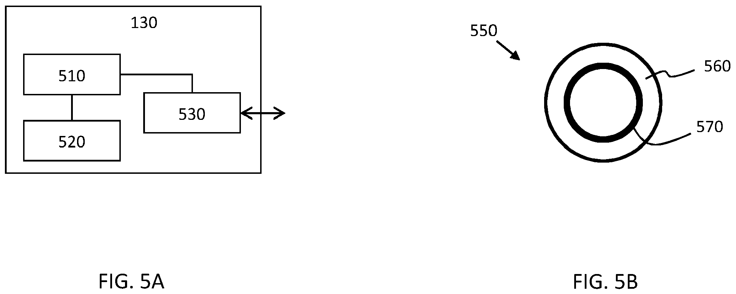

FIG. 5A schematically illustrates, in terms of a number of functional units, the components of a control unit 122 according to aspects of the discussions and methods disclosed herein. This control unit 122 may typically be comprised in the vehicle 100. Processing circuitry 510 is provided using any combination of one or more of a suitable central processing unit CPU, multiprocessor, microcontroller, digital signal processor DSP, etc., capable of executing software instructions stored in a computer program product, e.g., in the form of a storage medium 520. The processing circuitry 510 may further be provided as at least one application specific integrated circuit ASIC, or field programmable gate array FPGA.

Particularly, the processing circuitry 510 is configured to cause the control unit 122 to perform a set of operations, or steps, such as the methods discussed in connection to FIG. 4. For example, the storage medium 520 may store the set of operations, and the processing circuitry 510 may be configured to retrieve the set of operations from the storage medium 520 to cause the control unit 122 to perform the set of operations. The set of operations may be provided as a set of executable instructions. Thus, the processing circuitry 510 is thereby arranged to execute methods as herein disclosed.

The storage medium 520 may also comprise persistent storage, which, for example, can be any single one or combination of magnetic memory, optical memory, solid state memory or even remotely mounted memory.

The control unit 122 may further comprise an interface 530 for communications with at least one external device, such as vehicle sensors, brake controller and power take-off. As such the interface 530 may comprise one or more transmitters and receivers, comprising analogue and digital components and a suitable number of ports for wireline or wireless communication.

The processing circuitry 510 controls the general operation of the control unit 122, e.g., by sending data and control signals to the interface 430 and the storage medium 520, by receiving data and reports from the interface 430, and by retrieving data and instructions from the storage medium 520. Other components, as well as the related functionality, of the control node are omitted in order not to obscure the concepts presented herein.

FIG. 5B shows an example of a computer program product. A computer readable medium 560 carrying a computer program 570 comprising program code means for performing the steps of aforementioned method when said program product is run on a computer or on processing circuitry 510 of a control unit 122.

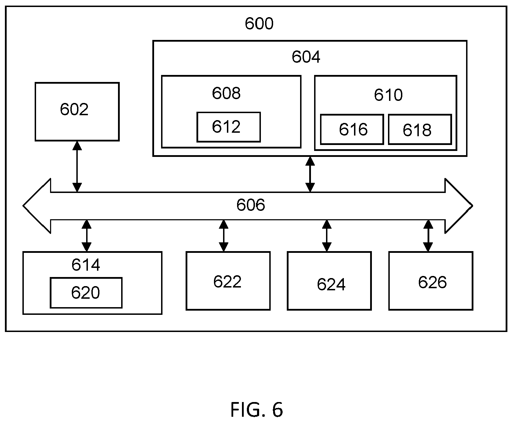

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 130 for preventing rollover of a tipper truck 100 on inclined surfaces 210, wherein the control unit is configured to: receive sensor data from one or more vehicle sensors, wherein the sensor data comprises a lateral inclination angle θ_{y}, establish compliance or non-compliance with a safety protocol, wherein compliance with the safety protocol is established if the lateral inclination angle θ_{y} does not exceed a predefined lateral inclination angle threshold θₘₐₓ, which represents a maximum allowable lateral inclination angle, abort tipping operation in response to non-compliance with the safety protocol, and adjust suspension systems 220L, 220R of the truck 100 in response to compliance with the safety protocol, such that a suspension adjustment angle φ_{y} counteracts the lateral inclination angle θ_{y}, and proceed with the tipping operation once the suspension adjustment angle φ_{y} has fully compensated for the lateral inclination angle θ_{y}.

Example 2: The control unit of example 1, wherein establishing the compliance with the safety protocol includes determining a maximum allowable tipper body angle that will ensure that the center of gravity of the tipper truck does not exceed stability boundaries for rollover stability during operation.

Example 3: The control unit of any of examples 1-2, wherein aborting tipping operation comprises disengaging power take-off, such that a hydraulic system of the truck 100 for operating the tipper body is deactivated.

Example 4: The control unit of any of examples 1-3, wherein the tipper truck is a tractor-trailer combination and the received sensor data further comprises an articulation angle δ between the tractor and the trailer, and wherein the compliance with the safety protocol further requires that the articulation angle δ is below a predefined articulation angle threshold δₘₐₓ, which represents a maximum permissible articulation angle.

Example 5: The control unit of any of examples 1-4, wherein the received sensor data further comprises lateral motion v, a_{y}, r, and wherein the compliance with the safety protocol further requires that the lateral motion v, ay, r does not exceed a predefined lateral motion threshold vₘₐₓ, a_{y,max}, rₘₐₓ which represents a maximum allowable lateral motion.

Example 6: The control unit of any of examples 1-5, wherein the received sensor data further comprises wheel slips, and wherein the compliance with the safety protocol further requires that the wheel slips do not exceed a predefined wheel slip threshold which represents maximum allowable wheel slip.

Example 7: The control unit of any of examples 1-4, wherein the received sensor data further comprises longitudinal inclination angle θₓ, and wherein the control unit 130 is configured to determine an orientation of the tipper truck 100 based on the lateral inclination angle θ_{y} and the longitudinal inclination angle θₓ, such that the lateral inclination angle θ_{y} does not exceed a predefined lateral inclination angle threshold θₘₐₓ.

Example 8: A tipper truck 100 comprising: vehicle sensors for obtaining sensor data, wherein the vehicle sensors comprise a tilt sensor 120 and suspension adjustment sensor 121 and a control unit according to any examples 1-3.

Example 9: The tipper truck of example 8, wherein the tipper truck 100 is a tractor-trailer combination, and wherein the vehicle sensors further comprise an articulation angle sensor 122, and a control unit 130 according to any of examples 1-4.

Example 10: The truck of any of examples 8-9, wherein the vehicle sensors further comprise wheel slip sensors for obtaining wheel slip data, a camera or an inertial measurement unit IMU for obtaining lateral motion data, and a second tilt sensor for obtaining longitudinal inclination angle, and a control unit 130 according to any of examples 1-7.

Example 11: A method for preventing rollover of a tipper truck 100 on inclined surfaces 210, the method comprising: receiving S1 sensor data from one or more vehicle sensors, wherein the sensor data comprises a lateral inclination angle θ_{y}, and a suspension adjustment angle φ_{y}, establishing S2 compliance or non-compliance with a safety protocol, wherein compliance with the safety protocol is established if the lateral inclination angle θ_{y} does not exceed a predefined lateral inclination angle threshold θₘₐₓ, which represents a maximum allowable lateral inclination angle, aborting S3 tipping operation in response to non-compliance with the safety protocol, adjusting S4 suspension system 220L, 220R of the truck 100 in response to compliance with the safety protocol, such that the suspension adjustment angle φ_{y} counteracts the lateral inclination angle θ_{y}, and proceeding S5 with tipping operation once the suspension adjustment angle φ_{y} has compensated for the lateral inclination angle θ_{y}.

Example 12: The method of example 11, wherein establishing S2 the compliance with the safety protocol further comprises determining a maximum allowable tipper body angle that will ensure that the center of gravity of the tipper truck 100 does not exceed stability boundaries for rollover stability during operation.

Example 13: The method of any of examples 11-12, wherein aborting S3 tipping operation further comprises disengaging power take-off, such that a hydraulic system of the truck 100 for operating the tipper body is deactivated.

Example 14: The method of any of examples 11-13, wherein aborting S3 tipping operation further comprises activating a safety mechanism that prevents the operator from performing a manual override.

Example 15: The method any of examples 11-14, wherein the tipper truck 100 is a tractor-trailer combination and the received sensor data further comprises an articulation angle δ between the tractor and the trailer, and wherein the compliance with the safety protocol further requires that the articulation angle δ is below a predefined articulation angle threshold δₘₐₓ which represents a maximum permissible articulation angle.

Example 16: The method of any of examples 11-15, wherein the received sensor data further comprises lateral motion v, a_{y}, r, and wherein the compliance with the safety protocol further requires that the lateral motion v, a_{y}, r does not exceed a predefined lateral motion threshold vₘₐₓ, a_{y,max}, rₘₐₓ which represents maximum allowable lateral motion.

Example 17: The method of any of examples 11-16, wherein the received sensor data further comprises wheel slips, and wherein compliance with the safety protocol further requires that the wheel slips do not exceed a predefined wheel slip threshold which represents a maximum allowable wheel slip.

Example 18: The method of any of examples 11-17, wherein the received sensor data further comprises a longitudinal inclination angle θₓ, and the method further comprises determining an orientation of the tipper truck based on the lateral inclination angle θ_{y} and the longitudinal inclination angle θₓ, such that the lateral inclination angle θ_{y} does not exceed a predefined lateral inclination angle threshold θₘₐₓ.

Example 19: A computer program 550 comprising program code means for performing the steps of any of examples 11-18 when said program is run on a computer or on a processing circuitry 510 of a control unit 130.

Example 20: A computer readable medium 660 carrying a computer program 670 comprising program code means for performing the steps of any of examples 11-18 when said program product is run on a computer or on processing circuitry 610 of a control unit 130.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (130) for preventing rollover of a tipper truck (100) on inclined surfaces (210), wherein the control unit is configured to:
receive sensor data from one or more vehicle sensors (120), wherein the sensor data comprises a lateral inclination angle (θ_{y}),
establish compliance or non-compliance with a safety protocol, wherein compliance with the safety protocol is established if the lateral inclination angle (θ_{y}) does not exceed a predefined lateral inclination angle threshold (θₘₐₓ), which represents a maximum allowable lateral inclination angle,
abort tipping operation in response to non-compliance with the safety protocol, and
adjust suspension systems (220L, 220R) of the truck (100) in response to compliance with the safety protocol, such that a suspension adjustment angle (φ_{y}) counteracts the lateral inclination angle (θ_{y}), and proceed with the tipping operation once the suspension adjustment angle (φ_{y}) has fully compensated for the lateral inclination angle (θ_{y}).

2. The control unit of claim 1, wherein establishing the compliance with the safety protocol includes determining a maximum allowable tipper body angle that will ensure that the center of gravity of the tipper truck does not exceed stability boundaries for rollover stability during operation.

3. The control unit of any of claims 1-2, wherein the tipper truck (100) is a tractor-trailer combination and the received sensor data further comprises an articulation angle (δ) between the tractor (100A) and the trailer (100B), and wherein the compliance with the safety protocol further requires that the articulation angle (δ) is below a predefined articulation angle threshold (δₘₐₓ), which represents a maximum permissible articulation angle.

4. The control unit of any of claims 1-3, wherein the received sensor data further comprises lateral motion (v, a_{y}, r), and wherein the compliance with the safety protocol further requires that the lateral motion (v, a_{y}, r) does not exceed a predefined lateral motion threshold (vₘₐₓ, a_{y,max}, rₘₐₓ), which represents a maximum allowable lateral motion.

5. The control unit of any of claims 1-4, wherein the received sensor data further comprises wheel slips, and wherein the compliance with the safety protocol further requires that the wheel slips do not exceed a predefined wheel slip threshold, which represents a maximum allowable wheel slip.

6. The control unit of any of claims 1-5, wherein the received sensor data further comprises longitudinal inclination angle (θₓ), and wherein the control unit (130) is configured to determine an orientation of the tipper truck (100) based on the lateral inclination angle (θ_{y}) and the longitudinal inclination angle (θₓ), such that the lateral inclination angle (θ_{y}) does not exceed a predefined lateral inclination angle threshold (θₘₐₓ).

7. A tipper truck (100) comprising:
vehicle sensors for obtaining sensor data, wherein the vehicle sensors comprise a tilt sensor (120) and a suspension adjustment sensor (121).
a control unit according to any claims 1-2.

8. The tipper truck of claim 7, wherein the tipper truck (100) is a tractor-trailer combination, and wherein the vehicle sensors further comprise an articulation angle sensor (122), and a control unit (130) according to any of claims 1-3.

9. The truck of any of claims 7-8, wherein the vehicle sensors further comprise wheel slip sensors for obtaining wheel slip data, a camera or an inertial measurement unit (IMU) for obtaining lateral motion data, and a second tilt sensor for obtaining longitudinal inclination angle, and a control unit (130) according to any of claims 1-6.

10. A method for preventing rollover of a tipper truck (100) on inclined surfaces (210), the method comprising:
receiving (S1) sensor data from one or more vehicle sensors (120), wherein the sensor data comprises a lateral inclination angle (θ_{y}),
establishing (S2) compliance or non-compliance with a safety protocol, wherein compliance with the safety protocol is established if the lateral inclination angle (θ_{y}) does not exceed a predefined lateral inclination angle threshold (θₘₐₓ), which represents a maximum allowable lateral inclination angle,
aborting (S3) tipping operation in response to non-compliance with the safety protocol,
adjusting (S4) suspension system (220L, 220R) of the truck (100) in response to compliance with the safety protocol, such that a suspension adjustment angle (φ_{y}) counteracts the lateral inclination angle (θ_{y}), and
proceeding (S5) with tipping operation once the suspension adjustment angle (φ_{y}) has fully compensated for the lateral inclination angle (θ_{y}).

11. The method of claim 10, wherein establishing (S2) the compliance with the safety protocol further comprises determining a maximum allowable tipper body angle that will ensure that the center of gravity of the tipper truck (100) does not exceed stability boundaries for rollover stability during operation.

12. The method any of claims 10-11, wherein the tipper truck (100) is a tractor-trailer combination and the received sensor data further comprises an articulation angle (δ) between the tractor (100A) and the trailer (100B), and wherein the compliance with the safety protocol further requires that the articulation angle (δ) is below a predefined articulation angle threshold (δₘₐₓ), which represents a maximum permissible articulation angle.

13. The method of any of claims 10-12, wherein the received sensor data further comprises lateral motion (v, a_{y}, r), and wherein the compliance with the safety protocol further requires that the lateral motion (v, a_{y}, r) does not exceed a predefined lateral motion threshold (vₘₐₓ, a_{y,max}, rₘₐₓ), which represents a maximum allowable lateral motion.

14. The method of any of claims 10-13, wherein the received sensor data further comprises wheel slips, and wherein the compliance with the safety protocol further requires that the wheel slips do not exceed a predefined wheel slip threshold, which represents a maximum allowable wheel slip.

15. A computer readable medium (660) carrying a computer program (670) comprising program code means for performing the steps of any of claims 10-14 when said program product is run on a computer or on processing circuitry (610) of a control unit (130).
